(19) **Europäisches Patentamt / European Patent Office / Office européen des brevets**

(11) **EP 4 449 455 B1**

(12) **EUROPEAN PATENT SPECIFICATION**

(45) Date of publication and mention
of the grant of the patent:
**22.10.2025 Bulletin 2025/43**

(21) Application number: **22840292.1**

(22) Date of filing: **07.12.2022**

(51) International Patent Classification (IPC):
**H01F 5/02** (2006.01)   **H01F 6/06** (2006.01)
**H01F 7/20** (2006.01)

(52) Cooperative Patent Classification (CPC):
**H01F 6/06; H01F 5/02; H01F 7/202**

(86) International application number:
**PCT/GR2022/000068**

(87) International publication number:
**WO 2023/111601 (22.06.2023 Gazette 2023/25)**

(54) **AN ARRAY COMPRISING THE WINDING OF CONDUCTORS IN THE FORM OF A STRUCTURE, SUCH AS A TAPE, FOR ANY CANTED COSINE THETA (CCT) MAGNET, WITH ANY MULTIPOLE LAYOUT**

ARRAY MIT WICKLUNG AUS LEITERN IN FORM EINER STRUKTUR, WIE ETWA EIN BAND, FÜR JEDEN SCHRÄGEN KOSINUS-TOTA-MAGNETEN (CCT) MIT MEHRPOLIGEM LAYOUT

RÉSEAU COMPRENANT L'ENROULEMENT DE CONDUCTEURS SOUS LA FORME D'UNE STRUCTURE, TELLE QU'UNE BANDE, POUR TOUT AIMANT THÊTA COSINUS INCLINÉ (CCT), AVEC N'IMPORTE QUELLE DISPOSITION MULTIPOLAIRE

(84) Designated Contracting States:
**AL AT BE BG CH CY CZ DE DK EE ES FI FR GB HR HU IE IS IT LI LT LU LV MC ME MK MT NL NO PL PT RO RS SE SI SK SM TR**

(30) Priority: **15.12.2021 GR 20210100878**

(43) Date of publication of application:
**23.10.2024 Bulletin 2024/43**

(73) Proprietor: **KORATZINOS, Michail**
**1295 Tannay (CH)**

(72) Inventor: **KORATZINOS, Michail**
**1295 Tannay (CH)**

(74) Representative: **P&TS SA (AG, Ltd.)**
**Avenue J.-J. Rousseau 4**
**P.O. Box 2848**
**2001 Neuchâtel (CH)**

(56) References cited:
**WO-A1-2012/117249      US-A1- 2011 279 215**
**US-A1- 2021 350 957      US-B1- 6 921 042**

- **PENG QUANNG ET AL: "Harmonic Suppression Study on Twin Aperture CCT Type Superconducting Quadrupole for CEPC Interaction Region", IEEE TRANSACTIONS ON APPLIED SUPERCONDUCTIVITY, IEEE, USA, vol. 30, no. 8, 29 June 2020 (2020-06-29), pages 1 - 5, XP011799645, ISSN: 1051-8223, [retrieved on 20200716], DOI: 10.1109/TASC.2020.3005401**
- **GARCIA FAJARDO L ET AL: "First demonstration of high current canted-cosine-theta coils with Bi-2212 Rutherford cables", SUPERCONDUCTOR SCIENCE AND TECHNOLOGY, IOP PUBLISHING, TECHNO HOUSE, BRISTOL, GB, vol. 34, no. 2, 8 January 2021 (2021-01-08), pages 24001, XP020360069, ISSN: 0953-2048, [retrieved on 20210108], DOI: 10.1088/1361-6668/ABC73D**

**Description**

The current invention solves the problem of the winding of High Temperature Superconductors (HTS), in the form of a tape, in magnets of the Canted Cosine Theta (CCT) type.

The state-of-the-art for the winding of CCT magnets today does not allow the winding of HTS tapes. The present invention modifies the way the windings are defined and allows the use of HTS tapes. It is based on a modification of the definition of the CCT winding shape in the plane perpendicular to the length of the magnet, from a circle to a "Race Track" pattern, made up of straight and curved segments.

**Prior Art**

CCT electromagnets, also known as "double-helix" magnets, are based on a design where a groove is cut in a mechanical support structure, the "magnet former", which precisely determines the position of the cable-conductor and the current flow, which determine the characteristics of the magnet. The magnetic field is created inside the magnet former, which is hollow. The equations defining the position of the groove (and, therefore, of the conductor), are given below. The first mention of CCT magnet design can be found in the 70s. CCT magnets started becoming popular among magnet designers during the current decades (2010-2020), due to the advent of automated lathe techniques, (CNC machines) and 3D printers, as well as due to their simplicity, excellent magnetic quality, low-cost and speed of construction.

**Prior Art and initial Description**

The current invention introduces a new winding array that allows High Temperature Superconductor (HTS) Tapes to be used in a Canted Cosine Theta (CCT) magnet former. Furthermore, a new design of the CCT magnet former in a way that allows for such a specific winding becomes possible. Without it, it is impractical to build a CCT magnet with HTS conductors.

HTS materials offer high efficiency compared to traditional low-temperature superconductor materials and are now increasingly used. However, the usual form of HTS superconductors is HTS Tapes and not the traditional conductors of cylindrical cross-section (cables). These tapes are usually 4-12 mm wide, 50-100 microns thick and can have a length of up to many kilometers.

Tapes differ from the traditional conductors of cylindrical cross-section by the fact that they are flexible in the direction parallel to their width, but very rigid and fragile in the direction parallel to their thickness.

In order to achieve higher magnetic fields and given the fact that HTS tapes are very thin, a stack of tapes can be used. The invention refers to stacks of HTS tapes, including the stack of one (single strip).

The magnetic field of a magnet, in a plane perpendicular to its long dimension, is characterized by a mixture of skew and normal multipole components. Multipoles are dipoles, quadrupoles, hexapoles, and so on. Most magnets have a main multipole component with all others being a lot weaker, (of the order of one thousandth of the strength of the main multipole, or less), which represent magnetic defects.

CCT magnets have a groove in a hollow-shaped former in the shape of a hollow cylinder, the centre of which at the lowest point is given by the equation

$$x = R\cos\theta;$$

$$y = R\sin\theta;$$

$$z = \sum_{n_B}\left[\frac{R\sin(n_B\theta)}{n_B\tan\alpha_{nB}} + \frac{\omega\theta}{2\pi}\right] + \sum_{n_A}\left[\frac{R\cos(n_A\theta)}{n_A\tan\alpha_{nA}} + \frac{\omega\theta}{2\pi}\right] \qquad (1)$$

Where R is the radius of the coil and $n_A$ and $n_B$ are the skew and normal multipole orders. The order number 1 represents a dipole magnetic field, 2 quadrupole, 3 sextupole, and so on. The angles $\alpha_{nA}$ and $\alpha_{nB}$ are the minimum angles of the groove with respect to the vertical plane (x,y) per desired multipole, (called the *skew angles*). They are inversely proportional to the strength of that component. An angle of 90 degrees would ensure no relevant multipole component, whereas the minimum angle, (that gives the maximum multipole field), is limited by practical considerations, (the groove cannot run onto itself), to about 25 degrees. $\theta$ is the winding angle and runs from 0 to $2\pi n_t$ where $n_t$ is the number of turns. $\omega$ is the conductor pitch, (the distance between successive windings).

In the limit where conductor size is very small compared to R (i.e. the grove has zero width and depth and the conductor is, simply, a line), the resulting field of an infinitely long magnet away from the edges, is a perfect reflection of the mix of multipoles of equation [1], with no multipole errors.

The most common magnets are dipoles, (all angles $\alpha$ are $\pi/2$ except for $n_B = 1$), quadrupoles (all angles $\alpha$ are $\pi/2$ except for $n_B = 2$) and sextupoles (all angles $\alpha$ are $\pi/2$ except for $n_B = 3$). A CCT magnet, in addition to the main multipole, can be designed to contain also small amounts of other multipoles.

Since this arrangement produces also a field along the longitudinal (z) direction, which is unwanted in most cases, a second CCT layer with a slightly increased R, depending on the thickness of the former, opposite winding direction and a skew angle of opposite sign is incorporated. The start of the outer layer and the end of the inner layer are located on top of one another. This second layer has the same current flowing in the opposite direction than the first layer. The result is that the longitudinal fields of the two layers cancel, and the intended multipole contributions have the same sign. Sometimes the CCT design is referred to as "double helix" due to the two layers. In any case, the two layers are identical in concept so we will only refer to one layer here. The exact same method can be incorporated in the other layer.

According to equation [1], in the (x,y) plane, the groove describes a circle and in three dimensions it is located on the surface of a cylinder. In $z\theta$ space, the groove describes a sine curve for a specific multipole.

Recently, some CCT magnets follow a curved path, where the centre of the magnet (which in equation [1] lies at $(x, y) = (0,0)$ ) describes a circle in the *(x,z)* plane with radius $R_{curved}$, where $R_{curved} \gg R$.

Garcia Fajardo, et al. (2021), in "First Demonstration of High Current CCT coils with Bi-2212 Rutherford Cables", discloses conductors of round cross-section and Rutherford cables which comprise round conductors. US 6 921 042 discloses a similar combination.

CCT coils are disclosed also by Peng Quanng, at al. (2020), in "Harmonic Suppression study on Twin Aperture CCT Type Superconducting Quadrupole for CEPC Interaction Region".

US 2021/350 957 A1, discloses high-temperature superconductor tapes.

WO 2012/117249 A1 discloses a magnet with concentric tubular coils having elliptical cross-section.

US 2011/279215 A discloses a wiring assembly having a conductor positioned about an axis in a helical-like configuration to provide a repetitive pattern which rotates around the axis.

**CCT magnet winding for HTS tapes: the Present Invention**

One preferred embodiment of the invention comprises the following parts and features:

1. High Temperature Superconductor (HTS) tape (1)
2. Magnet former (2)
3. Tape trace (3)
4. Straight Segment(s) (4)
5. Curved segment(s) (5)
6. Enclosed radius of curvature (6)
7. Winding angle $\theta$ (7)

**The following Figures are attached to the current Description:**

**Figure 1A:** a stack of HTS tapes (1), (dark colour, left), following the groove in a Magnet former (2) of a quadrupole CCT magnet (right). Half a turn is shown, and the stack of tapes is shown separately from the magnet former.

**Figure 1B:** transparent sketch of a stack of tapes (half turn) and the tape trace (3) (the black line) following a "Race Track" CCT path.

**Figure 2A:** the geometric site of the HTS tape trace (3) in the (x,y) plane forms a "Race Track" shape (solid line), compared to the conventional type of CCT design which is a circle (dashed line). This "Race Track" consists of a number of straight segments (4) and curved segments (5). This example is for a quadrupole magnet and the dimensions are exaggerated for illustration purposes. The "Race Track" for a dipole has two straight segments, for a quadrupole four, for a sextupole six, etc.

**Figure 2B:** alternative design (one of many) where the centres of the arcs are at the same point, at (0, 0).

**Figure 3A and 3B:** the current invention uses a "Race Track" profile instead of a circular shape as a tape trace (3) in the (x,y) plane, projection in the (x,y)plane in **3A,** isometric view in **3B.** Half a turn of the HTS tape stack is visible. (A typical magnet has many turns).

**Figure 3C:** same as **3A,** transparent sketch. The tape trace (3) can be seen. It has the shape of a "Race Track" with curved segments connected by straight segments.

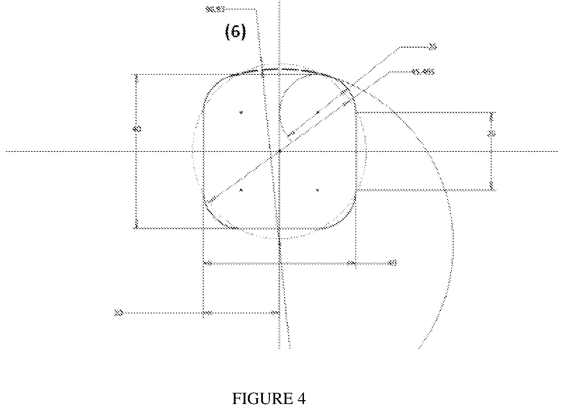

**Figure 4:** The straightness requirement of the straight segments (4) of the "Race Track" in this invention, with a specific example for easier understanding. The "Race Track" CCT design of a quadrupole is shown in the xy plane projection (solid line). This is the projection of the tape trace (3) in the (x,y) plane. The straight segments have lengths of 20mm, and the convex segments are formed by circles with a diameter of 20mm. The total width of the "Track" is 40mm, and the circumference is indicated by the dotted line. This leads to an average diameter of 45.46mm and the average radius $R_{mean}$ = 22.73 mm. A curve appears for the straight-line segment at the top (dashed line), where the curvature diameter is 90.93 mm.

## Detailed Description

Formula [1] in the previous section works perfectly for a flexible conductor such as a thin wire of cylindrical cross-section. However, the HTS conductors, as mentioned above, come with the form factor of a tape of a few millimetres wide, (4 to 12 mm), and a thickness of a few tens of micrometers (50-100 $\mu$m). Due to the large difference size in the two directions, a tape exhibits great directionality as it can bend with very little effort around the direction parallel to its width, but it cannot bend, (exhibits very high stiffness), around the direction parallel to its thickness. The same applies to stacks of tapes. Forcing a tape to bend in the plane of high stiffness beyond the elastic limit might result in damaging the tape and possibly to a loss of superconducting performance.

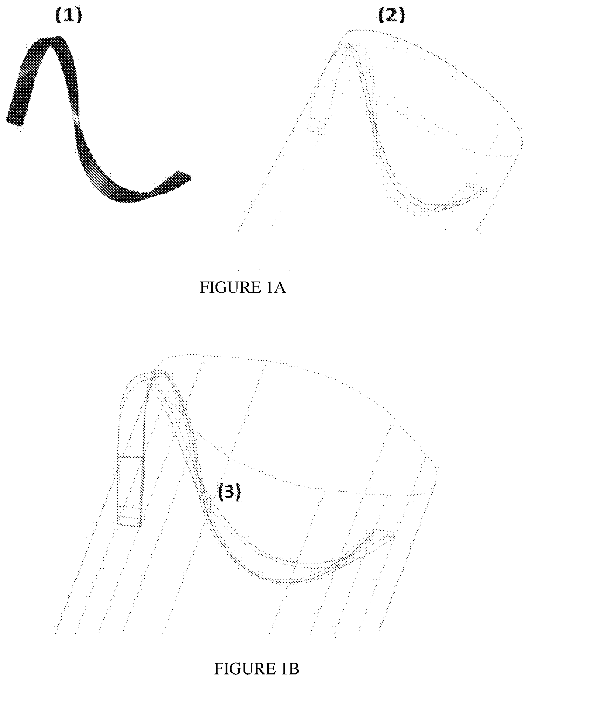

The CCT formula described in [1] applies to a line and not a solid object. A round conductor whose diameter is much smaller than the radius R of the magnet can be approximated very well by a line. A tape, however, in general, cannot. The tape trace (3) is defined as the centre of one edge, or of the middle of the stack of tapes. This edge is taken to be the one closest to the centre of the magnet, (defined along the line (x,y) = (0,0) ((3) in Figure 1B), however, the exact same arguments apply if the edge is the one furthest away from the centre of the magnet, or the middle of the tape. The tape trace (3) is the one that follows equation [1].

When a tape, or stack of tapes, tries to follow a curved path on the surface of a cylinder, it buckles, and the tape is no longer perpendicular to the surface of the cylinder at all times. Successive bends, as in the case of the CCT, require the stack of tapes to change from a positive bending radius (concave) to a negative radius (convex), as shown in Figure 1A. Between two successive turns the tape must twist. However, twisting while following a curved surface is generally not possible, as it requires bending along the non-bending axis of the tape.

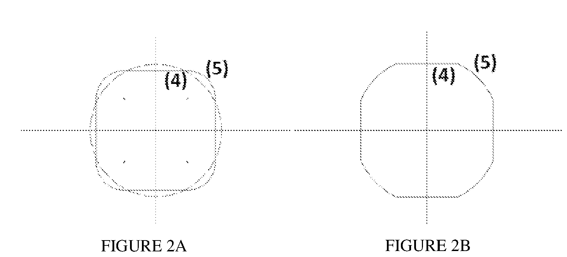

The present invention uses a "Race Track" shape for the geometric site of the tape trace (3) in the (x,y) plane, (which in the case of equation [1] is a circle for a conventional CCT magnet), as shown in Figure 2. Straight Segments (4) are joined by curved segments (5), for example, circle arcs. The centres of these circles may be different from the centre of the magnet, as in Figure 2A, or coincide as in Figure 2B, or have any other shape. The straight segments enable the tape to twist between concave and convex bends, which is not possible if there is only one circular segment as in the conventional CCT magnet.

The number of straight segments (4) is equal to twice the order series of the basic multipole of the magnet: (two straight segments for a dipole, four for a quadrupole, six for a sextupole, etc.). Straight segments give the opportunity to the stack of tapes to twist, ready for the next bend. These straight segments (4) are located around the tape twisting points of the design around the areas where $sin(n_B \theta) = 0$ for normal multipoles and $cos(n_A \theta) = 0$ for skew multipoles, where $\theta$ is the winding angle and $n_A$ and $n_{BA}$ is the order number of the skew and normal multipoles ($n_A$, $n_B$ = 1, 2, 3, ...).

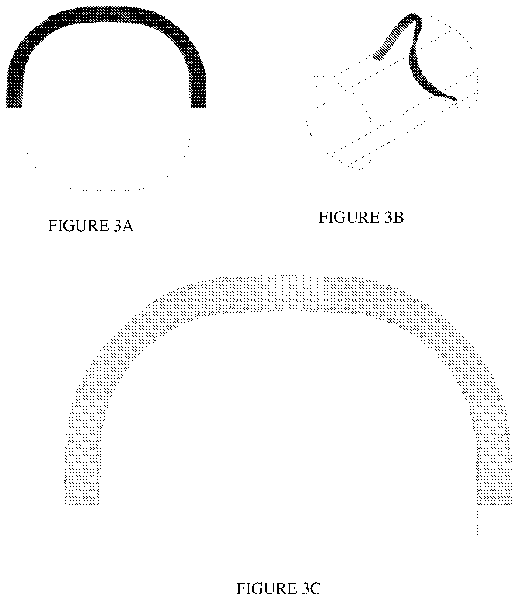

Figure 3 shows the design of the "Race Track" of this invention in the case of a quadrupole; the projection on the (x,y) plane, as well as the isometric view are displayed; a small part of the stack of HTS tapes, (half a turn), is displayed, but the principle described here applies everywhere along the conductor.

A circle is fitted to the plane that encloses exactly the projection, and at the same time touches the curved segments (5), before and after the straight part and its radius is noted. This is the enclosed radius of curvature (6) of the projection of the straight segments (4) in the plane perpendicular to the length of the magnet.

## Claims

1. A modified Canted Cosine Theta (CCT) magnet with a dipole or multipole layout, comprising a winding having a stack of conductor tapes, wherein a projection of a trace of the conductor tapes in a plane perpendicular to the length of the magnet is made up of straight segments joined by curved segments.

2. The modified CCT magnet of the preceding claim, wherein the conductor tapes are high-temperature superconductor tape.

3. The modified CCT magnet of the preceding claim, wherein the conductor tapes are wound upon a hollow former in a groove thereof.

4. The modified CCT magnet of any one of the preceding claims, wherein the number of straight segments is two straight segments for a dipole, four for a quadrupole, six for a sextupole.

5. The modified CCT magnet of any one of claims 1-3, wherein the number of straight segments is twice the order number of the basic multipole of the magnet.

6. The modified CCT magnet of any one of the preceding claims, wherein a length of the straight segments is greater than, or equal to, a width of the conductor tapes.

7. The modified CCT magnet of any one of the preceding claims, wherein an axis of the straight segments is at an angle with respect to the length of the magnet.

8. Use of the modified CCT magnet of any one of the preceding claims in an external magnetic field wherein a current is generated in the conductor tapes by the external magnetic field.

**Patentansprüche**

1. Ein modifizierter Canted Cosine Theta (CCT)-Magnet mit einem Dipol- oder Multipol-Layout, umfassend eine Wicklung mit einem Stapel von Leiterbändern, wobei eine Projektion einer Spur der Leiterbänder in einer Ebene senkrecht zur Länge des Magneten aus geraden Segmenten besteht, die durch gekrümmte Segmente verbunden sind.

2. Der modifizierte CCT-Magnet nach dem vorhergehenden Anspruch, wobei die Leiterbänder Hochtemperatur-Supraleiterbänder sind.

3. Der modifizierte CCT-Magnet nach dem vorhergehenden Anspruch, bei dem die Leiterbänder auf einen Hohlkörper in einer Nut desselben gewickelt sind.

4. Der modifizierte CCT-Magnet nach einem der vorhergehenden Ansprüche, wobei die Anzahl der geraden Segmente zwei gerade Segmente für einen Dipol, vier für einen Quadrupol und sechs für einen Sextupol beträgt.

5. Der modifizierte CCT-Magnet nach einem der Ansprüche 1 bis 3, wobei die Anzahl der geraden Segmente das Doppelte der Ordnungszahl des Grundmultipols des Magneten beträgt.

6. Der modifizierte CCT-Magnet nach einem der vorhergehenden Ansprüche, bei dem eine Länge der geraden Segmente größer als oder gleich einer Breite der Leiterbänder ist.

7. Der modifizierte CCT-Magnet nach einem der vorhergehenden Ansprüche, wobei eine Achse der geraden Segmente in einem Winkel in Bezug auf die Länge des Magneten verläuft.

8. Verwendung des modifizierten CCT-Magneten nach einem der vorangehenden Ansprüche in einem äußeren Magnetfeld, wobei durch das äußere Magnetfeld ein Strom in den Leiterbändern erzeugt wird.

**Revendications**

1. Un aimant cosinus thêta à spires inclinées (CCT) modifié, avec une conformation de dipôle ou multipôle, comprenant un bobinage avec un empilement de rubans conducteurs, dans lequel une projection d'une trace des rubans conducteurs sur un plan orthogonal à une longueur de l'aimant est composée de segments droits unis par des segments courbés.

2. L'aimant CCT modifié de la revendication précédente, dans lequel les rubans conducteurs sont des rubans de supraconducteur à haute température.

3. L'aimant CCT modifié de la revendication précédente, dans lequel les rubans conducteurs sont bobinés sur un corps d'aimant creux dans une rainure de celui-ci.

4. L'aimant CCT modifié de l'une quelconque des revendications précédentes, dans lequel le nombre de segments droits est deux segments droits pour un dipôle, quatre pour un quadrupôle, six pour un hexapôle.

5. L'aimant CCT modifié de l'une quelconque des revendications 1-3, dans lequel le nombre de segments droits est le double de l'ordre de multipôle principal de l'aimant.

6. L'aimant CCT modifié de l'une quelconque des revendications précédentes, dans lequel une longueur de segments droits est égale à ou plus grande d'une largeur des rubans conducteurs.

7. L'aimant CCT modifié de l'une quelconque des revendications précédentes, dans lequel un axe des segments droits est anglé par rapport à la longueur de l'aimant.

8. Utilisation de l'aimant CCT modifié de l'une quelconque des revendications précédentes, dans un champ magnétique externe, un courant étant généré dans les rubans conducteurs par le champ magnétique externe.

(1)

(2)

FIGURE 1A

(3)

FIGURE 1B

FIGURE 2A                    FIGURE 2B

FIGURE 3A

FIGURE 3B

FIGURE 3C

FIGURE 4

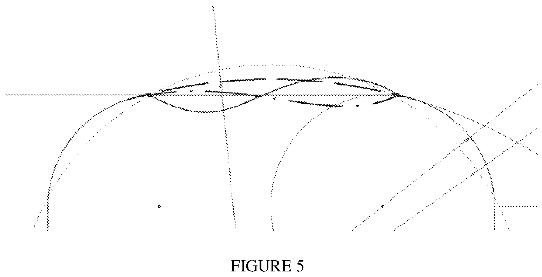

FIGURE 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6921042 B
- US 2021350957 A1
- WO 2012117249 A1
- US 2011279215 A